Europäisches Patentamt

European Patent Office

Office européen des brevets

(19)

(11) Publication number: **0 019 635**
**B1**

(12) **EUROPEAN PATENT SPECIFICATION**

(45) Date of publication of patent specification: **12.10.83**

(21) Application number: **79900732.3**

(22) Date of filing: **27.06.79**

(86) International application number:
**PCT/JP79/00166**

(87) International publication number:
**WO 80/00168 07.02.80 Gazette 80/3**

(51) Int. Cl.³: **F 01 N 3/02, F 01 N 3/10,
F 01 N 3/20, B 01 D 53/34,
F 23 J 15/00, F 23 C 9/06**

(54) **EXHAUST GAS CLEANING SYSTEM FOR A DIESEL ENGINE INSTALLED IN A BUILDING.**

(30) Priority: **27.06.78 JP 77794/78**

(43) Date of publication of application:
**10.12.80 Bulletin 80/25**

(45) Publication of the grant of the patent:
**12.10.83 Bulletin 83/41**

(84) Designated Contracting States:
**FR**

(56) References cited:
**JP - A - 54 012 029
JP - B - 49 016 028
JP - U - 53 021 214
JP - Y - 53 023 848
US - A - 3 557 725
US - A - 3 803 839**

(73) Proprietor: **SHIMIZU CONSTRUCTION Co. LTD.
16-1, Kyobashi 2-chome
Chuo-ku Tokyo 104 (JP)**

(72) Inventor: **SUZUKI, Yoshinobu
Fujisaki 4-1-6
Narashino-shi Chiba 275 (JP)**
Inventor: **CHIBA, Kiyoshi
Ohkuramachi 262
Machida-shi Tokyo 194-01 (JP)**
Inventor: **TOKUHIRO, Tomoya
Nagae 1413-236
Hayamacho, Mirugun Kanagawa 240-01 (JP)**
Inventor: **IWASAWA, Yoshiyuki
Nukui 1-30-7 Nerima-ku
Tokyo 176 (JP)**
Inventor: **KAJIOKA, Yasuo
Daida 1-20-8
Setagaya-ku Tokyo 155 (JP)**
Inventor: **KOMINE, Tomio
Daida 1-20-8
Setagaya-ku Tokyo 155 (JP)**

(74) Representative: **Hagel, Francis et al,
Cabinet Robert Bloch 39, avenue de Friedland
F-75008 Paris (FR)**

Courier Press, Leamington Spa, England

Exhaust gas cleaning system for a diesel engine installed in a building.

The present invention relates to an exhaust gas cleaning system for a diesel engine installed in a building, according to the preamble part of claim 1.

Large-size buildings are equipped with emergency generators which are adapted to be driven by diesel engines to provide electric power in case of emergency such as power failure. In order to ensure that the emergency generator operates without fail in case of emergency, it is necessary to conduct periodical test run. Since this test run is conducted with no load applied to the diesel engine, a large amount of smoke is emitted from the diesel engine together with noxious substances such as carbon monoxide (CO) and hydrocarbon (HC), as well as stimulative bad smell. In some cases, these exhaust gases are discharged to the atmosphere through a flue which opens at a point only several meters from the ground level. In such a case, the smoke and gases of bad smell lie over the road to deteriorate the appearance of the street and give passersby unpleasant feeling. Also, these noxious gases constitute one of the causes for pollution of environmental air.

Conventionally, there have been proposed and used various types of exhaust system for diesel engines, particularly for those used in combination with construction equipments working at tunnel construction site.

CH.A. 323 115 discloses a system of the above mentioned type, with two passages and a main damper which can direct the flow in either one of the two passages.

Generally speaking, gas cleaning may be achieved either with

(a) a system having a smoke removal device such as a cyclone and a catalyst convertor which are disposed in the exhaust passage, or

(b) a system in which exhaust gas is blown into the exhaust passage or a system in which a catalyst convertor is combined with a water-scrubbing type smoke removal device adapted to atomize and spray water into the exhaust gas.

The inertia type dust collector such as the cyclone of the system (a) above is effective only for dust particles of particle size exceeding several microns. Most of dust particles contained by the exhaust gas are too small to be collected by the inertia type dust collector such as the cyclone. Thus, the conventional inertia type dust collector such as the cyclone cannot remove the smoke particles satisfactorily from the exhaust gas emitted from the diesel engine. In addition, the carbon particles of the smoke are deposited to the surface of the catalyst during the long use to deteriorate the catalytic function of the catalyst to hinder the removal of the bad small and noxious gases. It is therefore necessary to take the catalyst out of the system and heat it up to a temperature between 700°C and 800°C every two to three months. This periodical work for recovering the function of the catalyst is extremely troublesome and time consuming. In addition, the function of the catalyst is deteriorated due to the repeated heating to the high temperature. Also, the catalyst is liable to be distorted and broken by the heat.

The water-scrubbing type smoke removal device of the system (b) above can remove the smoke sufficiently. However, a large amount of steam is generated as a result of the injection or spray of water. This steam is discharged as "white smoke" to limit the visibility. Also, this system requires various maintenance works such as supply of the scrubbing water and the disposal of the effluent. In order to completely remove the bad small and noxious gases, it is necessary to maintain the exhaust gas temperature at a level of between 300°C and 500°C, at the catalyst inlet. The scrubbing of the exhaust gas by the water-scrubbing type smoke removal device, however, lowers the exhaust gas temperature. It is therefore, not allowed to install the catalyst convertor at the downstream side of the water-scrubbing type smoke removal device as viewed in the direction of flow of the gas. In consequence, the attaching of the smoke particles to the catalyst convertor takes place inevitably resulting in various problems which have been described before in connection with the drawbacks of the system (a).

Under these circumstances, the present invention aims at providing a system for cleaning the exhaust gas from diesel engine capable of completely cleaning the exhaust gas during the test run (no load running) of the diesel engine.

Thus, the system of the present invention is characterized by the characterizing part of claim 1.

Even though US.A. 4 054 418 also discloses a gas cleaning system, this system has only one passage, and, moreover, it has no regenerating device for a heat-resistant filter.

According to the invention, the exhaust gas is at first made to flow through the heat-resistant filter so that the smoke particles are caught and removed by the heat-resistant filter. The exhaust gas is then introduced into the catalyst convertor so that the bad smell and noxious gases are removed from the exhaust gas.

Still according to the invention, the water-scrubbing device facilitates the maintenance work, in regenerating the heat-resistant filter clogged with the smoke particles.

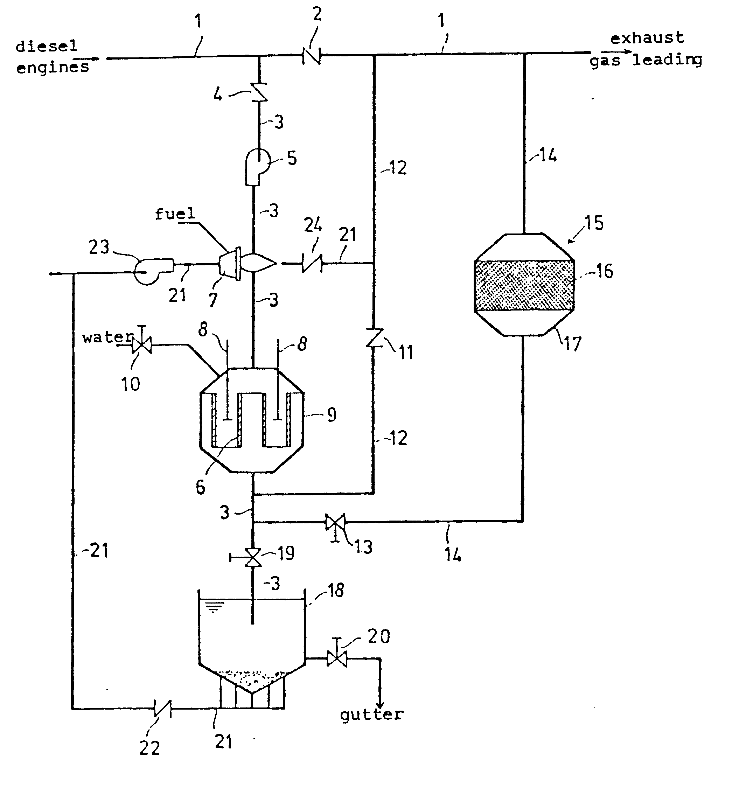

The system of the invention will now be described in detail, particularly with reference to the Figure which is a block diagram of a preferred embodiment of the exhaust gas cleaning system of the invention.

Referring to the drawing, a reference numeral 1 denotes a main passage of the exhaust gas leading from a diesel engine to a flue. A main damper 2 is disposed in this passage 1. An exhaust gas cleaning passage 3 shunts from the portion of the main passage 1 upstream from the main damper 2 as viewed in the direction of flow of the exhaust gas, and leads to an exhaust gas cleaning system which will be detailed later. The exhaust gas cleaning passage 3 is provided with a damper 4 disposed therein. The arrangement is such that, as the damper 4 and the damper 2 are operated to open and close, the exhaust line is switched between a first mode in which the exhaust gas is directly discharged through the main passage 1 and a second mode in which the exhaust gas is forced to flow through the exhaust gas cleaning system.

A reference numeral 5 denotes a blower disposed in the exhaust gas cleaning passage 3 and adapted for compensating for the pressure drop encountered by the exhaust gas when the latter flows through the exhaust gas cleaning system. A reference numeral 6 denotes a heat-resistant filter provided in the passage 3, while a reference numeral 7 denotes a heating device (burner) disposed in the passage 3 at the upstream side of the heat resistant filter 6 so as to heat the exhaust gas before entering the heat-resistant filter 6. This heat-resistant filter 6 is made of metal fibers. More specifically, this heat-resistant filter 6 is made of several kinds of metal fibers having different fiber diameters corresponding to the particle-size distribution of the smoke particles. These metal fibers of different fiber diameters are formed in layers which are superposed and laminated to provide a cylindrical form as a whole.

The heat-resistant filter 6 is provided with a water-scrubbing device. The heat-resistant filter 6 as a whole is accommodated by a chamber 9 which is designed and constructed to store the scrubbing water therein. The scrubbing water is introduced into the chamber 9 through a valve 10, and is stored in the chamber 9. The water-scrubbing device 8 is constituted by an ultrasonic-wave vibrator or a high-pressure injection nozzle for agitating the water and removing smoke particles from the heat resistant filter and thus washing the latter.

A drying passage 12 communicating with the main passage 1 through the damper 11 and a passage 14 communicating with the main passage 1 through a valve 13 are connected to the outlet side of the heat-resistant filter 6 of the exhaust gas cleaning passage 3. The passage 14 constitutes the downstream side section of the exhaust gas cleaning passage 3 and is provided with a catalyst convertor 15 which is adapted to remove the bad small and noxious gases from the exhaust gas. The catalyst convertor 15 is constituted by a catalyst 16 and a chamber 17 accommodating the latter.

The extreme end of the passage 3 downstream from the point at which the passage 14 shunts is directly opened into a settling tank 18. The arrangement is such that, as the valve 19 provided at the end of the passage 3 is opened, the scrubbing water in the aforementioned chamber 9 is directly released into the settling tank 18.

A reference numeral 20 denotes a valve attached to the settling tank 18. The supernatant liquid in the settling tank 18 is discharged to a gutter as the valve 20 is opened.

A reburning passage 21 extends from the bottom of the settling tank 18 to the aforementioned preheating device (burner) 7. The smoke particles (carbon particles) separated and dried in the settling tank 18 are delivered to the preheating device through a damper 22 and a blower 23, so as to be burnt in the preheating device 7. The extreme end of the reburning passage 21 is connected to the aforementioned passage 12 through a damper 24 so that the carbon particles can be directly emitted to the flue if desired.

The exhaust gas cleaning system of the invention having the described construction operates in a manner illustrated hereinunder.

For operating the diesel engine to test the emergency electric power source, only the damper 4 and the valve 13 are opened, while the other valves and dampers are all closed. Then, the exhaust gas emitted from the diesel engine is made to flow through the exhaust gas cleaning passage 3 through the damper 4 and, after a boosting by the blower 5, sent to the heating device 7 to be heated. The heated exhaust gas is then made to flow through the heat-resistant filter 6. In this case, the exhaust gas temperature during the no-load operation is comparatively low (about 100°C) and the unburnt substances of the fuel are attaching to the smoke particles to make the latter sticky. However, according to the invention, the unburnt substances are completely burnt by the heating device 7 and are changed into less sticky carbon particles. It is, therefore, possible to suppress the increase of the pressure drop of the exhaust gas as the latter passes the heat-resistant filter 6, the pressure drop being attributable to the smoke particles caught by the heat-resistant filter 6. For this reason, it is possible to prolong the time until the filter 6 becomes clogged with the smoke particles. At the same time, the regeneration (scrubbing) of the filter 6 is facilitated.

In order to make sure of the burning of the unburnt substances attaching to the smoke particles, as well as the burning of the fuel, combustion air is supplied to the heating device 7 by means of a blower 23.

Since the heat-resistant filter 6 is made of metallic fibers, it is not damaged at all even when subjected to the heated exhaust gas the temperature of which well reaches about 400°C. In addition, since the catching of the smoke particles relies upon the filtration performed by the filter, it is possible to catch and remove even small smoke particles.

The exhaust gas which has passed through the heat-resistant filter 6 is introduced into the catalyst convertor 15 through the passage 14, and is finally relieved to the atmosphere through the flue.

Since the exhaust gas temperature has been raised sufficiently by the preheating device, the catalyst 16 of the catalyst convertor 15 is sufficiently activated to remove the bad smell and noxious gases from the exhaust gas satisfactorily. In addition, the smoke particles of the exhaust gas have been removed sufficiently by the heat-resistant filter 6, so that the attaching of the smoke particles to the catalyst 16 is prevented to ensure a long life of the catalyst convertor while avoiding the deterioration of the catalytic function of the latter.

On the other hand, for regenerating the heat-resistant filter 6, the valve 10 is opened to pour the scrubbing water into the chamber 9, and the scrubbing device 8 is actuated to wash the smoke particles away from the heat-resistant filter 6. Thereafter, the valve 19 is opened to release the water after scrubbing into the settling tank 18. This operation is repeated three to four times to sufficiently wash and regenerate the heat-resistant filter 6. The water in the settling tank 18 is separated into water and carbon particles in several hours, because the heavier smoke particles are sedimented. The separated supernatant water is then discharged into the gutter as the valve 20 is opened.

It is also possible to promptly dry the heat-resistant filter 6, by supplying hot air into the chamber 9 through the preheating device 7, by means of the blower 23, while opening only the damper 11. Similarly, it is possible to forcibly dry the smoke particles accumulated on the bottom of the settling tank 18 after the removal of the supernatant water by introducing the hot air into the settling tank 18 through the valve 19.

The dried smoke particles in the settling tank 18 can be sucked through the reburning passage 21 by the suction vacuum of the blower 23 and delivered to the preheating device 7 to be burnt completely. The resultant gas is then exhausted through the passage 12 and the main passage 1.

In case of emergency, the diesel engine operates with rated load applied thereto. The volume of the exhaust gas emitted from the diesel engine during the rated load operation is about 10 times larger as that produced during the no-load operation of the same diesel engine. In this case, therefore, the main damper 2 is opened to permit the direct discharge of the exhaust gas through the main passage 1. Although smoke and noxious gases are relieved to the atmosphere from the flue which is opened at a point not so high above the ground level. This, however, will be granted from a social point of view, because this takes place only in case of an emergency.

## Claims

1. An exhaust gas cleaning system for a diesel engine installed in a building, comprising a main exhaust passage (1) leading from a diesel engine to a flue and provided with a main damper (2); and an exhaust gas cleaning passage (3) bypassing said main exhaust passage (1) between an upstream side portion and a downstream side portion, said main damper (2) being provided for the exhaust gas to flow alternatively through said main exhaust gas passage or said cleaning passage (3), characterised in that said exhaust gas cleaning passage (3) has a heating device (7) adapted for further heating the exhaust gas, a heat-resistant filter (6) for removing the smoke particles from the exhaust gas, and a catalyst convertor (15) adapted for removing bad smell and noxious components from said exhaust gas, said heating device (7), heat-resistant filter (6) and said catalyst convertor (15) being disposed in said exhaust gas cleaning passage (3) in the mentioned order, said heat-resistant filter (6) being provided with a water scrubbing device (8) for removing smoke particles therefrom.

2. An exhaust gas cleaning system as claimed in claim 1, wherein said water scrubbing device (8) comprises a high-pressure injection nozzle and there is provided a chamber (9) containing said heat-resistant filter (6) and water in it.

3. An exhaust gas cleaning system as claimed in claim 1, wherein said water scrubbing device (8) can be actuated and there is provided a chamber (9) containing said heat-resistant filter (6) and water in it.

4. An exhaust gas cleaning system as claimed in one of claims 2 and 3, wherein a settling tank (18) is connected to said exhaust gas cleaning passage (3) downstream of said chamber (9) for separating the smoke particles from the regenerating water.

5. An exhaust gas cleaning system as claimed in one of claims 2 to 4, wherein a drying passage (12) is shunting said exhaust gas cleaning passage (3).

6. An exhaust gas cleaning system as claimed in claim 4, wherein a reburning passage (21) for dried particles is shunting said settling tank (18).

## Revendications

1. Système d'épuration des gaz d'échappement pour un moteur diesel installé dans un bâtiment, comprenant un conduit d'évacuation principal (1) allant d'un moteur diesel à une gaine d'évacuation et équipé d'un registre principal (2), et un conduit d'épuration des gaz d'échappement (3) bipassant ledit conduit d'évacuation principal (1) entre une portion amont et une portion aval, ce registre principal (2) étant prévu pour que les gaz d'échappement circulent, soit à travers le conduit principal des gaz e'échappement, soit à travers le conduit d'épuration (3), caractérisé par le fait que le conduit d'épuration des gaz d'échappement (3) comporte un dispositif de chauffage (7) agencé pour réchauffer les gaz d'échappement, un filtre résistant à la chaleur (6) pour enlever les particules de fumée des gaz d'échappement, et un convertisseur à catalyse (15) agencé pour extraire des gaz d'échappement les composants nocifs et malodorants, le dispositif de chauffage (7), le filtre résistant à la chaleur (6) et le convertisseur à catalyse (15) étant disposés dans l'ordre mentionné dans le conduit d'épuration des gaz d'échappement (3), le filtre résistant à la chaleur (6) étant équipé d'un dispositif de lavage à l'eau (8) pour en enlever les particules de fumée.

2. Système d'épuration des gaz d'échappement selon la revendication 1, dans lequel le dispositif de lavage à l'eau (8) comprend un buse d'injection à haute pression et dans lequel il est prévu une chambre (9) contenant le filtre résistant à la chaleur (6) et l'eau.

3. Système d'épuration des gaz d'échappement selon la revendication 1, dans lequel le dispositif de lavage à l'eau (8) peut être actionné et il est prévu une chambre (9) contenant le filtre résistant à la chaleur (6) et l'eau.

4. Système d'épuration des gaz d'échappement selon l'une des revendications 2 et 3, dans lequel une cuve de sédimentation (18) est raccordée au conduit d'épuration des gaz d'échappement (3) en aval de cette chambre (9) pour séparer les particules de fumée de l'eau de régénération.

5. Système d'épuration des gaz d'échappement selon l'une des revendications 2 à 4, dans lequel un conduit de séchage (12) est branché sur le conduit d'épuration des gaz d'échappement (3).

6. Système d'épuration des gaz d'échappement selon la revendication 4, dans lequel un conduit de recombustion (21) pour les particules séchées est branché sur la cuve de sédimentation (18).

**Patentansprüche**

1. Abgasreinigungssystem für einen in einem Gebäude installierten Dieselmotor mit einem Hauptauslaßkanal (1), der von einem Dieselmotor zum Abgasabzugskanal führt und mit einem Hauptabsperrorgan (2) versehen ist, und mit einem Abgasreinigungskanal (3), der als By-Pass-Kanal zum Hauptauslaßkanal (1) an einen stromaufwärts liegenden Abschnitt und an einen stromabwärts liegenden Abschnitt desselben angeschlossen ist, wobei das Hauptabsperrorgan (2) dazu dient, die Abgase alternativ durch den Hauptabgaskanal oder den Reinigungskanal strömen zu lassen, dadurch gekennzeichnet, daß der Abgasreinigungskanal (3) eine Heizeinrichtung (7) zum weiteren Erhitzen des Abgases, einen hitzebeständigen Filter (6) zum Abscheiden der in den Abgasen enthaltenen Rauchpartikel und einen Katalytischen Umformer (15) zum Entfernen von stoffen mit schlechtem Geruch und Schadstoffen aus den Abgassen umfasst, dass die Heizeinrichtung (7), der hitzebeständige Filter (6) und der katalytische Umformer (15) in dem Abgasreinigungskanal (3) in der genannten Reihenfolge angeordnet sind, und daß dem hitzebeständigen Filter (6) eine Wasser-Skrubbereinrichtung (8) zum Abscheiden von Rauchpartikeln zugeordnet ist.

2. Abgasreinigungssystem nach Anspruch 1, dadurch gekennzeichnet, daß die Wasser-Skrubbereinrichtung (8) eine Hochdruck-Einspritzdüse enthält, und daß eine Kammer (9) vorhanden ist, die den hitzebeständigen Filter (6) und Wasser enthält.

3. Abgasreinigungssystem nach Anspruch 1, dadurch gekennzeichnet, daß die Wasser-Skrubbereinrichtung (8) steuerbar ist, und daß eine Kammer (9) vorgesehen ist, die den hitzebeständigen Filter (6) und Wasser enthält.

4. Abgasreinigungssystem nach einem der Ansprüche 2 und 3, dadurch gekennzeichnet, daß an den Abgasreinigungskanal (3) stromabwärts von der Kammer (9) ein Absetzbehälter (18) angeschlossen ist, um die Rauchpartikel aus dem Regenierungswasser abzutrennen.

5. Abgasreinigungssystem nach einem der Ansprüche 2 bis 4, dadurch gekennzeichnet, daß an den Abgasreinigungskanal (3) ein Trockenkanal (12) angeschlossen ist.

6. Abgasreinigungssystem nach Anspruch 4, dadurch gekennzeichnet, daß an den Absetzbehälter (18) ein Wiedererhitzungskanal (21) für getrocknete Partikel angeschlossen ist.

0 019 635

diesel engines

exhaust gas leading

water

fuel

gutter

1